# EUROPÄISCHE PATENTANMELDUNG

(11) **EP 0 615 019 A1**
(43) Veröffentlichungstag der Anmeldung: **14.09.1994**
(21) Anmeldenummer: 94810152.2
(22) Anmeldetag: 09.03.1994
(51) Int. Cl.: D21H 11/14, D21C 5/02, D21H 21/04

(54) **Verfahren zur Herstellung von Papier**

(30) Priorität: 10.03.1993 CH 719/93
(71) Anmelder: PAPIERFABRIK UTZENSTORF AG, CH-3427 Utzenstorf (CH)
(72) Erfinder: Wankmüller, Sigfried, CH-1208 Genf (CH); Schmid, Harald, CH-3427 Utzenstorf (CH)
(74) Vertreter: Hug Interlizenz AG

(57) **Zusammenfassung**

Bei einem Verfahren zur Herstellung von Papier wird ein Ausgangsstoff (AS) unter Verwendung von Prozesswassern (PW1, . . ,PW3) und Prozess-Chemikalien (PC1, . . ,PC3) in wässriger Suspension in einem mehrere Aufbereitungsstufen (ABS1, . . ,ABS3) umfassenden Prozess zu einem Endstoff (ES) aufbereitet und anschliessend in einer Papiermaschine weiterverarbeitet, wobei in wenigstens einer der Aufbereitungsstufen (ABS1, . . ,ABS3) ein Teil des Wassers mittels einer am Ausgang der Aufbereitungsstufe angeordneten Eindickungsstufe (EDS1, . . ,EDS3) entnommen und unter Bildung eines separaten Prozesswasserkreislaufes (PWK1, . . ,PWK3) auf den Eingang derselben Aufbereitungsstufe als Prozesswasser (PW1, . . ,PW3) zurückgeführt wird. Bei einem solchen Verfahren wird eine Verringerung des Wasserverbrauchs und gleichzeitige Einsparung von Prozess-Chemikalien sowie eine optimale Prozess führung in den einzelnen Verfahrenstufen dadurch erreicht, dass in der Rückführung dieses Prozesswasserkreislaufes Störstoffe aus dem Prozesswasser durch selektive Flotation ohne Zugabe chemischer Flockungsmittel ausschliesslich mittels Injektion eines sauerstoffhaltigen Gases entfernt werden.

## Beschreibung

### TECHNISCHES GEBIET

Die vorliegende Erfindung bezieht sich auf das Gebiet der Papierproduktion. Sie betrifft ein Verfahren zur Herstellung von Papier, bei welchem Verfahren ein Ausgangsstoff unter Verwendung von Prozesswassern und Prozess-Chemikalien in wässriger Suspension in einem mehrere Aufbereitungsstufen umfassenden Prozess zu einem Endstoff aufbereitet und anschliessend in einer Papiermaschine weiterverarbeitet wird, wobei in wenigstens einer der Aufbereitungsstufen ein Teil des Wassers mittels einer am Ausgang der Aufbereitungsstufe angeordneten Eindickungsstufe entnommen und unter Bildung eines separaten Prozesswasserkreislaufes auf den Eingang derselben Aufbereitungsstufe als Prozesswasser zurückgeführt wird.

Ein solches Verfahren ist beispielsweise aus der Druckschrift CH-A-547 914 bekannt.

### STAND DER TECHNIK

Bei der Herstellung von Papier werden für die Rohstoffaufbereitung, d.h. die Bereitstellung einer wässrigen, möglichst störstoffarmen Faserstoffsuspension für die Papiermaschine, in den einzelnen Aufbereitungsstufen grosse Mengen an Prozesswasser und auch Prozess-Chemikalien benötigt. Insbesondere bei der Verwendung von Altpapier als Rohstoff umfasst die dafür vorgesehene Altpapieraufbereitung eine Vielzahl von hintereinandergeschalteten Reinigungsstufen, die teilweise der Entfernung der eigentlichen Druckfarbe ("Deinking"), teilweise der Entfernung von anderen ungelösten groben und feinen Verunreinigungen, kolloiden und gelösten Störstoffen dienen.

Für den Deinking-Prozess beispielsweise, der häufig auf einem Flotationsverfahren basiert, sind dann Chemikalien wie Natronlauge, Wasserglas, Wasserstoffperoxid, Dispergiermittel, Fettsäure und dgl. notwendig, die einerseits die möglichst vollständige Ablösung der Druckfarbenpartikel von den Papierfasern und deren Dispergierung in der wässrigen Suspension, und andererseits deren Sammlung durch Ausbildung von flotierbaren Druckfarbenpartikel-Seifen-Aggregaten bewirken.

Wird ein solcher Aufbereitungsprozess in einer einzigen Aufbereitungstufe durchgeführt, laufen nebeneinander verschiedene chemische (und physikalische) Vorgänge ab, die teilweise widersprechende Prozessbedingungen erfordern und sich hinsichtlich der verwendeten Chemikalien gegenseitig negativ beeinflussen. In einer solchen Aufbereitungsstufe können dann nach Art eines Kompromisses durch geeignete Kombination verschiedener Chemikalien lediglich mittlere Prozessbedingungen eingestellt werden, unter denen zwar alle Teilprozesse zufriedenstellend, nicht aber optimal ablaufen.

Es ist deshalb in der eingangs genannten Druckschrift bereits vorgeschlagen worden, bei einem Flotations-Deinking-Verfahren für die Altpapieraufbereitung die Auflöse- und Dispergierphase von der eigentlichen Flotationsphase dadurch zu trennen, dass zunächst zur Suspension nur die für die Ablösung und Dispergierung notwendigen Chemikalien gegeben werden, dass zwischen den beiden Phasen der Suspension durch Eindickung Wasser entzogen, und dass der erhaltene Dickstoff mit einem anderen Prozesswasser wieder verdünnt, mit den für die Flotation notwendigen Chemikalien versetzt und anschliessend flotiert wird.

Hierdurch wird eine gegenseitige Störung der unterschiedlichen Chemikalien weitgehend vermieden und die Möglichkeit einer Optimierung der einzelnen Teilprozesse eröffnet. Das bei der Eindickung entzogene Wasser wird darüber hinaus zurückgeführt und in der Ablöse- und Dispergierphase wiederverwendet, so dass sich für den ersten Teilprozess der Ablösung und Dispergierung ein separater geschlossener Prozesswasserkreislauf ergibt, der zu einer Einsparung an Wasser und Chemikalien führt.

Die Bildung eines separaten, geschlossenen Wasserkreislaufs hat neben den erwähnten Vorteilen jedoch auch gravierende Nachteile: Einerseits stellt sich durch die Schliessung des Kreislaufs eine stationäre, sehr hohe "Störstofffracht" im Prozesswasser ein, welche die Wirksamkeit des Aufbereitungsprozesses erheblich vermindern kann. Andererseits kann es unter ungünstigen Bedingungen aufgrund von anaeroben Vorgängen (schleimbildende Mikroben) zu einem Prozesswasserkollaps kommen, der die Weiterverwendung des Prozesswassers unmöglich macht.

Es ist weiterhin bekannt (siehe den Artikel von K. Schnabel, "Chemikalienhaushalt einer Wasch-Deinking-Anlage", Wochenblatt für Papierfabrikation, 1990, Nr.6, S.233-237), bei der Altpapieraufbereitung durch Eindicken gewonnenes Rückwasser durch Zugabe von Flotationschemikalien und anschliessende Mikroflotation weitgehend von mitgeführten Feststoffen sowie kolloidalen und gelösten Anteilen zu befreien und als Klarwasser in einer anderen Stufe in den Aufbereitungsprozess wieder einzuspeisen.

Eine stufenspezifische Kreislaufschliessung mit ihrer vorteilhaften Trennung der chemischen Abläufe in den einzelnen Stufen, wie sie in der CH-A-547 914 beschrieben ist, ist hier nicht gegeben. Darüber hinaus bringt eine vollständige Reinigung mittels Mikroflotation nicht nur zusätzliche Chemikalien in den Prozess ein, die an anderer Stelle störend wirken können. Mit den Störstoffen werden auch zugleich die im Rückwasser stets enthaltenen Nutzstoffe, d.h. Faseranteile und Prozess-Chemikalien, entfernt, was die Faserstoffausbeute verringert und zu einer Erhöhung der Abfallmenge und des Chemikalienverbrauchs und der Kosten führt.

### DARSTELLUNG DER ERFINDUNG

Es ist daher Aufgabe der Erfindung, ein Herstellungsverfahren für Papier anzugeben, welches durch Verringerung des Wasserverbrauchs und gleichzeitige Einsparung von Prozess-Chemikalien kostengünstig und umweltschonend arbeitet und eine optimale Prozessführung in den einzelnen Verfahrensstufen gestattet.

Die Aufgabe wird bei einem Verfahren der eingangs genannten Art dadurch gelöst, dass in der Rückführung dieses Prozesswasserkreislaufes Störstoffe aus dem Prozesswasser durch selektive Flotation ohne Zugabe chemischer Flockungsmittel ausschliesslich mittels Injektion eines sauerstoffhaltigen Gases entfernt werden.

Durch die erfindungsgemässe "chemiefreie" selektive Flotation wird eine vollständige Schliessung des Prozesswasserkreislaufes innerhalb der jeweiligen Aufbereitungsstufe ermöglicht, wobei sowohl durch die sauerstoffbedingte Prozesswasserregeneration ein Prozesswasserkollaps verhindert, als auch der Chemikalienhaushalt der jeweiligen Stufe nicht negativ beeinflusst wird.

Besonders vorteilhaft ist es, wenn gemäss einer bevorzugten Ausführungsform der Erfindung als Ausgangsstoff zumindest teilweise Altpapier verwendet wird, und der Prozess eine erste Aufbereitungsstufe zur Auflösung des Altpapiers und Ablösung der auf dem Altpapier befindlichen Druckfarbe und eine zweite, nachfolgende Aufbereitungstufe zur Entfernung der abgelösten Druckfarbe umfasst, und die separate Rückführung und selektive Flotation des Prozesswassers in der ersten Aufbereitungsstufe erfolgt.

Auf diese Weise kann bei der Altpapieraufbereitung bereits zu einem frühen Zeitpunkt der Störstoffgehalt drastisch reduziert werden, was sich günstig auf die nachfolgenden Aufbereitungsprozesse auswirkt und letztendlich zu einer verbesserten Papierqualität und einer höheren Produktionskapazität führt.

Weiter Ausführungsformen ergeben sich aus den Unteransprüchen.

### KURZE ERLÄUTERUNG DER FIGUREN

Die Erfindung soll nachfolgend anhand von Ausführungsbeispielen im Zusammenhang mit den Figuren näher erläutert werden.
Es zeigen
- Fig. 1: das prinzipielle Verfahrensschema einer beispielhaften Rohstoffaufbereitung mit stufenweise geschlossenen, mit einer Reinigungsstufe versehenen Prozesswasserkreisläufen nach der Erfindung; und
- Fig. 2: das Verfahrensschema eines bevorzugten Ausführungsbeispiels der Erfindung, bei welchem die erste Aufbereitungsstufe einer Altpapieraufbereitung einen geschlossenen Prozesswasserkreislauf mit Reinigungsstufe aufweist.

### WEGE ZUR AUSFÜHRUNG DER ERFINDUNG

Die Erfindung bezieht sich auf ein Verfahren, bei welchem die während der Rohstoffaufbereitung und Papierfabrikation zirkulierenden Prozesskreislaufwässer mittels Injektion eines sauerstoffhaltigen Gases, insbesondere Luft, ohne zusätzlichen Einsatz von Wasseraufbereitungschemikalien durch eine sogenannte selektive Flotation gereinigt und von mitgeführten Störstoffen zumindest teilweise befreit werden.

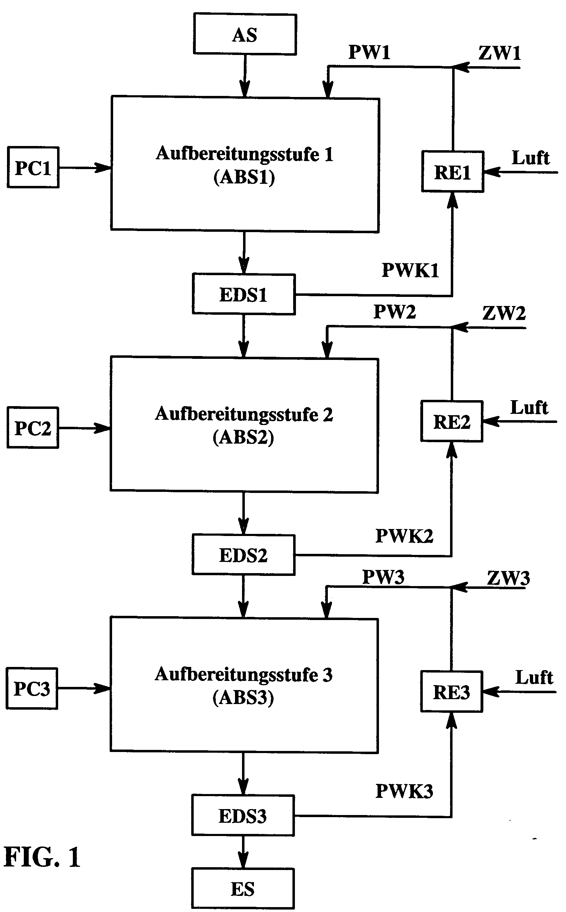

Das prinzipielle Verfahrensschema einer solchen Rohstoffaufbereitung ist in Fig. 1 beispielhaft wiedergegeben: Der gesamte Aufbereitungsprozess, der von einem Ausgangsstoff AS zu einem Endstoff ES führt, ist in diesem Beispiel in drei Aufbereitungsstufen ABS1,..,ABS3 unterteilt, in denen der Stoff in Form einer wässrigen Suspension behandelt wird. In jeder der Aufbereitungsstufen ABS1,..,ABS3 wird eingangsseitig ein entsprechendes Prozesswasser PW1,..,PW3 zugeführt, damit in der Stufe die Suspension mit der gewünschten Stoffdichte (z.B. 4%) vorliegt. Gleichzeitig werden die für den jeweiligen Teilprozess erforderlichen Prozess-Chemikalien PC1,..,PC3 zugesetzt, die beispielsweise zum Ablösen und Dispergieren von Druckfarben, zum Bleichen o.ä. notwendig sind.

Ausgangsseitig ist jeder Aufbereitungsstufe eine Eindickungsstufe EDS1,..,EDS3 (z.B. in Form einer Siebpresse) nachgeschaltet, die der Suspension Wasser entzieht und sie auf höhere Stoffdichten (beispielsweise 30%) eindickt. Das entzogene Wasser wird jeweils durch eine zugehörige Reinigungsstufe RE1,..,RE3 geschickt und innerhalb derselben Stufe eingangsseitig wieder als Prozesswasser eingespeist. Um allfällige Wasserverluste ausgleichen zu können, kann zusätzlich noch ein Zuwasser ZW1,..,ZW3 zugesetzt werden, welches entweder Frischwasser sein, aus anderen Stufen stammen oder eine Mischung aus beiden Arten sein kann.

Durch diese Art der Rückführung wird innerhalb jeder Stufe ein in sich geschlossener Prozesswasserkreislauf PWK1,..,PWK3 gebildet, der zu einer Trennung der einzelnen Aufbereitungsphasen führt. Auf diese Weise wird eine ungünstige gegenseitige Beeinflussung der verschiedenen Prozess-Chemikalien PC1,..,PC3 weitgehend vermieden, so dass Art und Konzentration der Chemikalien in jeder Stufe getrennt optimiert werden können. Zugleich kann der Verbrauch von Frischwasser auf ein absolutes Minimum reduziert werden, was neben einer verringerten Umweltbelastung auch eine erhebliche Kostenreduktion zur Folge hat.

In den Reinigungsstufen RE1,..,RE3 wird in das durch den Entwässerungsprozess anfallende Wasser Luft injiziert, derart, dass sich Blasen mit einem bestimmten mittleren Durchmesser (z.B. 1 mm) bilden. Durch die Blasen wird einerseits mittels selektiver Flotation eine Abtrennung der im Wasser enthaltenen Fremdstoffe und andererseits eine Regeneration des Kreislaufwassers durch Sauerstoffaufnahme erreicht. Durch diese Prozesswasserregeneration mittels Luftsauerstoff wird das Auftreten von schleimbildenden Mikroben, insbesondere bei der Aufbereitung von Altpapier, wirkungsvoll gehemmt. Hierdurch wird es überhaupt erst möglich, sämtliche Prozesswasserkreisläufe PWK1,..,PWK3 vollständig zu schliessen, ohne einen Prozesswasserkollaps durch anaerobe Vorgänge befürchten zu müssen, welcher das Prozesswasser zur Weiterverwendung unbrauchbar machen und sowohl die Qualität des erzeugten Faserstoffes als auch die Qualität des Endproduktes erheblich beeinträchtigen würde.

Weiterhin wird durch die Art der Prozesswasserreinigung, nämlich die selektive Flotation, eine deutliche Reduzierung der im Prozesswasser enthaltenen hydrophoben, suspendierten Stoffe erzielt. Hierdurch wird verhindert, dass sich im jeweiligen Prozesswasserkreislauf PWK1,..,PWK3 eine extrem hohe "Störstofffracht" stabilisiert, die sowohl den Faserstoffaufbereitungsprozess als auch den Papierfabrikationsprozess empfindlich stören würde.

Besonders wichtig ist dabei auch der vollständige Verzicht auf den Einsatz von chemischen Wasseraufbereitungsmitteln, insbesondere Flockungs- bzw. Flotationschemikalien. Die "chemielose" Flotation durch Luftinjektion zusammen mit der stufeninternen vollständigen Kreislaufschliessung führen insgesamt zu folgenden Vorteilen:
- die Gesamtmenge der Aufbereitungschemikalien und damit die Umweltbelastung und die Chemikalienkosten werden reduziert
- der Aufwand für die Wasseraufbereitung ist wesentlich geringer
- die chemischen Abläufe in den einzelnen Aufbereitungsstufen lassen sich besser steuern und ggf. optimieren
- die Anwesenheit bestimmter Prozess-Chemikalien lässt sich lokal begrenzen
- die Abwasserreinigung wird vereinfacht.

Die Vorteile sind dabei um so grösser, je mehr Stufen des Aufbereitungsprozesses mit einem in sich geschlossenen Prozesswasserkreislauf mit chemiefreier Flotationsreinigung ausgeführt werden.

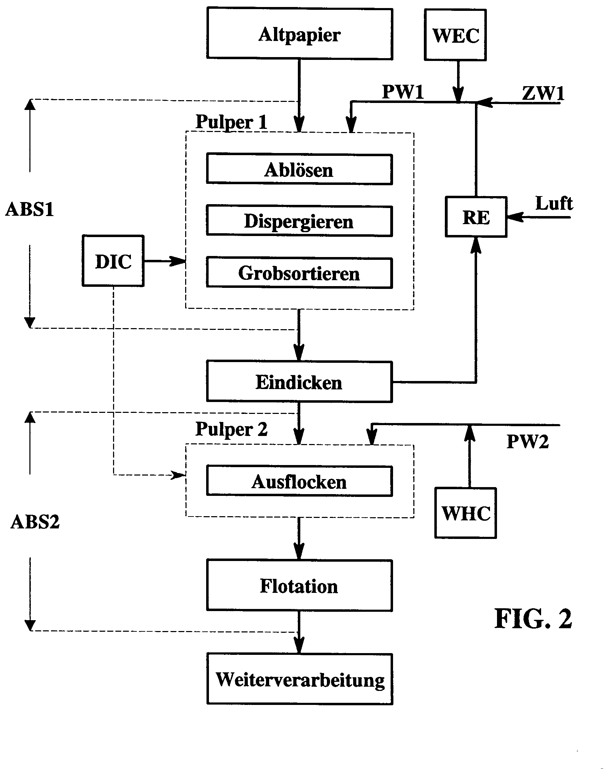

Besonders günstig wirkt sich die erfindungsgemässe Prozesswasserreinigung und -regeneration, wenn sie in der ersten Aufbereitungsstufe einer Altpapieraufbereitung angewandt wird, wie dies im Ausführungsbeispiel der Fig. 2 dargestellt ist. Der Ausgangsstoff ist hierbei Altpapier, welches in der ersten Aufbereitungsstufe ABS1 durch Zugabe von Prozesswasser PW1 in einem ersten Pulper 1 aufgelöst wird. Durch den Einsatz von Deinking-Chemikalien DIC werden die Druckfarbe und Störstoffe (z.B. sog. Stickies aus Streichfarbenlatices, Buchrücken, Selbstklebeartikel etc.) vom Altpapier abgelöst und im Prozesswasser suspendiert bzw. dispergiert.

Nach einer Grobsortierung wird der Faserstoff durch Entwässern eingedickt und innerhalb einer zweiten Aufbereitungsstufe ABS2 in einem zweiten Pulper 2 mit einem anderen Prozesswasser PW2 wieder verdünnt. Durch Zugabe weiterer Deinking-Chemikalien werden dort Druckfarben-Seifen-Aggregate gebildet, ausgeflockt und mittels einer nachfolgenden Flotation ausgetragen. Die weitere Verarbeitung in nachfolgenden Stufen kann dann eine Feinsortierung, eine Nachflotation oder ähnliche Folgeprozesse umfassen.

Durch das Entwässern (Eindicken) des Faserstoffes nach der Grobsortierung werden die in der Faserstoffsuspension enthaltenen Druckfarbenpartikel und Störstoffe aus dem Altpapierstoff entfernt. In dem durch den Filtrationsprozess entstehenden Prozesswasser befinden sich neben den genannten Fremdstoffen auch die zur Druckfarbenablösung (Tenside) und zur Bleiche (Wasserstoffperoxid, Wasserglas, Stabilisator) notwendigen Deinking-Chemikalien DIC.

Durch Reinigung des angefallenen Prozesswassers mittels Luftinjektion in der Reinigungsstufe RE werden die suspendierten Fremdstoffe durch Flotation aus dem Prozesswasser entfernt. Ein Teil der zur Aufbereitung des Altpapiers eingesetzten Chemikalien bleibt jedoch im Prozesswasser vorhanden und kann somit durch die Rezirkulation des Prozesswassers dem Auflöseprozess erneut zugeführt werden. Somit muss lediglich der Teil der Deinking-Chemikalien, der im ausgepressten Faserstoff zurückbleibt bzw. bei der vorausgegangenen Aufbereitungsphase verbraucht wurde (wie z.B. Wasserstoffperoxid und Seife), neu hinzugegeben werden. Je nach Chemikalie können dabei bis zu 50% eingespart werden.

Eine zusätzliche Behandlung des Prozesswassers mit Wasseraufbereitungschemikalien (Flockungsmittel) vor der Luftinjektion, wie sie aus dem Stand der Technik bekannt, hier aber ausdrücklich ausgeschlossen ist, würde zwar zu einer gewissen Effizienzsteigerung der Wasserreinigung führen. Jedoch würden zugleich die im Prozesswasser noch enthaltenen Prozess-Chemikalien mit entfernt werden, wodurch die Abwasserreinigungsanlage zusätzlich belastet und eine vorteilhafte Chemikalienrückführung verunmöglicht würde. Ausserdem würde der Prozess der Druckfarbenablösung und -dispergierung durch die zumindest teilweise im Prozesswasser zurückbleibenden Wasserreinigungschemikalien empfindlich gestört werden. Die Folge wäre eine unvermeidliche Beeinträchtigung des Deinkingergebnisses.

Durch das Entfernen des Suspensionswassers (bis zu 90%) beim Eindicken kann der für den Altpapierauflöseprozess notwendige niedrige pH-Wert von ungefähr 10 im Prozesswasserkreislauf der ersten Aufbereitungsstufe ABS1 aufrechterhalten werden, ohne dass der in den folgenden Stufen benötigte pH-Wert von mind. 20 dadurch beeinflusst wird. Durch diese Auftrennung in eine "alkalische Phase" und eine "neutrale Phase" wird eine weitere Bildung von Störstoffen durch Lösungsvorgänge in den weiteren Aufbereitungsprozessen vermieden. Hierdurch kann ein weitaus störstoffärmerer und reaktionsträgerer Altpapierstoff für die Papierproduktion hergestellt werden. Insbesondere ergibt sich ein verbesserter Sortiereffekt der durch den neutralen pH-Wert bewirkten Fällung von Störstoffen.

Durch die Kreislaufschliessung um den Altpapierauflöseprozess reduziert sich durch Reaktionen der eingebrachten Deinking-Chemikalien DIC (Wasserglas, Komplexbildner, Seife...) die Wasserhärte (Ca²⁺-Härte) des Prozesswassers erheblich. Da bekanntermassen die während des Druckfarbenablösevorganges vorhandene Wasserhärte für die Effizienz der Druckfarbenablösung massgeblich verantwortlich ist, wird durch diese Art der Kreislaufschliessung eine erhebliche Verbesserung der Druckfarbenablösung erreicht.

In diesem Zusammenhang ist es denkbar und vorteilhaft, für das in der ersten Aufbereitungsstufe ABS1 eingesetzte erste Prozesswasser PW1 das Wasser, das mit einer Härte von mehr als 5°dH vorliegt, durch Zugabe einer wasserenthärtenden Chemikalie WEC zu enthärten. Wegen der beschriebenen "chemischen" Trennung der einzelnen Kreisläufe bleibt eine solche Enthärtung auf die erste Aufbereitungsstufe ABS1 beschränkt und steigert dort die Effizienz der Druckfarbenablösung. In den nachfolgenden Stufen kann dann Wasser mit unverminderter Härte eingesetzt werden, wodurch die Flockung und Flotation vorteilhaft beeinflusst wird. Zur Erzielung der notwendigen Wasserhärte kann ggf. in an sich bekannter Weise eine wasserhärtende Chemikalie WHC, z.B. CaCl₂, eingesetzt werden.

Besonders einfach und wirkungsvoll lässt sich die chemische Enthärtung durchführen, wenn als wasserenthärtende Chemikalie WEC Na₂CO₃ verwendet wird.

Schliesslich ist es von besonderem Vorteil, wenn die erfindungsgemässe Prozesswasserreinigung bei der Altpapieraufbereitung in einer vorhandenen Bleichstufe angewandt wird, weil sich hierdurch gerade auch in dieser Stufe eine ganz wesentliche Einsparung bei der Menge der einzusetzenden Bleichchemikalien erreichen lässt.

Insgesamt ergibt sich mit der Erfindung ein Aufbereitungsverfahren, welches hinsichtlich Chemikalieneinsatz und Wasserverbrauch umweltschonend und kostengünstig ist, und in den einzelnen Aufbereitungsstufen getrennt optimiert werden kann.

### BEZEICHNUNGSLISTE

- ABS1,..,ABS3: Aufbereitungsstufe
- AS: Ausgangsstoff
- DIC: Deinking-Chemikalie
- EDS1,..,EDS3: Eindickungsstufe
- ES: Endstoff
- PC1,..,PC3: Prozess-Chemikalie
- PW1,..,PW3: Prozesswasser
- PWK1,..,PWK3: Prozesswasserkreislauf
- RE: Reinigungsstufe (Prozesswasser)
- RE1,...,RE3: Reinigungsstufe (Prozesswasser)
- WEC: wasserenthärtende Chemikalie
- WHC: wasserhärtende Chemikalie
- ZW1,..,ZW3: Zuwasser

## Patentansprüche

1. Verfahren zur Herstellung von Papier, bei welchem Verfahren ein Ausgangsstoff (AS) unter Verwendung von Prozesswassern (PW1,..,PW3) und Prozess-Chemikalien (PC1,..,PC3) in wässriger Suspension in einem mehrere Aufbereitungsstufen (ABS1,..,ABS3) umfassenden Prozess zu einem Endstoff (ES) aufbereitet und anschliessend in einer Papiermaschine weiterverarbeitet wird, wobei in wenigstens einer der Aufbereitungsstufen (ABS1,..,ABS3) ein Teil des Wassers mittels einer am Ausgang der Aufbereitungsstufe angeordneten Eindickungsstufe (EDS1,..,EDS3) entnommen und unter Bildung eines separaten Prozesswasserkreislaufes (PWK1,..,PWK3) auf den Eingang derselben Aufbereitungsstufe als Prozesswasser (PW1,..,PW3) zurückgeführt wird, dadurch gekennzeichnet, dass in der Rückführung dieses Prozesswasserkreislaufes Störstoffe aus dem Prozesswasser durch selektive Flotation ohne Zugabe chemischer Flockungsmittel ausschliesslich mittels Injektion eines sauerstoffhaltigen Gases entfernt werden.

2. Verfahren nach Anspruch 1, dadurch gekennzeichnet, dass als Ausgangsstoff (AS) zumindest teilweise Altpapier verwendet wird, dass der Prozess eine erste Aufbereitungsstufe (ABS1) zur Auflösung des Altpapiers und Ablösung der auf dem Altpapier befindlichen Druckfarbe und eine zweite, nachfolgende Aufbereitungstufe (ABS2) zur Entfernung der abgelösten Druckfarbe umfasst, und dass die separate Rückführung und selektive Flotation des Prozesswassers in der ersten Aufbereitungsstufe (ABS1) erfolgt.

3. Verfahren nach Anspruch 2, dadurch gekennzeichnet, dass für das in der ersten Aufbereitungsstufe (ABS1) verwendete erste Prozesswasser (PW1) ein Wasser mit einer Härte von mehr als 5°dH verwendet und durch Zugabe einer wasserenthärtenden Chemikalie (WEC) enthärtet wird.

4. Verfahren nach Anspruch 3, dadurch gekennzeichnet, dass als wasserenthärtende Chemikalie (WEC) Na₂CO₃ verwendet wird.

5. Verfahren nach Anspruch 1, dadurch gekennzeichnet, dass als Ausgangsstoff (AS) zumindest teilweise Altpapier verwendet wird, dass der Prozess eine Aufbereitungsstufe zur Bleiche des aufbereiteten Altpapiers umfasst, und dass die separate Rückführung und selektive Flotation des Prozesswassers in dieser Aufbereitungsstufe erfolgt.

6. Verfahren nach einem der Ansprüche 1 bis 5, dadurch gekennzeichnet, dass als sauerstoffhaltiges Gas bei der selektiven Flotation Luft verwendet wird.
